# FASCICULE DE BREVET EUROPEEN

(11) **EP 2 448 808 B1**
(45) Date de publication et mention de la délivrance du brevet: **14.08.2013**
(21) Numéro de dépôt: 10745346.6
(22) Date de dépôt: 28.06.2010
(51) Int. Cl.: B62D 49/06

(54) **VEHICULE ENJAMBEUR AUTOMOTEUR**
PFLEGETRAKTORFAHRZEUG MIT EIGENANTRIEB
SELF-PROPELLED HIGH-CLEARANCE VEHICLE

(30) Priorité: 01.07.2009 FR 0954520
(43) Date de publication de la demande: 09.05.2012
(73) Titulaire: SARL Grosjean Rene Viticole, 71260 Lugny (FR)
(72) Inventeur: GROSJEAN, René, F-71260 Peronne (FR)
(74) Mandataire: Thibault, Jean-Marc
(86) Numéro de dépôt international: PCT/FR2010/051329
(87) Numéro de publication internationale: WO 2011/001087

(56) Documents cités:
- FR-A- 2 678 888
- FR-A- 2 833 561

## Description

La présente invention concerne le domaine technique des véhicules de transport et de travail utilisés en relation avec les cultures en lignes de tailles basses, moyennes voire hautes.

L'objet de l'invention concerne ainsi un véhicule enjambeur automoteur adapté pour assurer une progression entre les lignes de culture s'élevant sur un sol en particulier irrégulier tout en assurant différents travaux concernant l'aménagement du sol et l'entretien des cultures.

Dans l'état de la technique, il a été proposé de nombreuses solutions de véhicules adaptés pour assurer ces fonctions tout en permettant leur progression tenant compte des irrégularités du terrain.

Il est connu par exemple par le brevet FR 2 833 561 un porte-outils pour culture en ligne comprenant un châssis enjambeur formé par un demi-châssis avant équipé à chaque extrémité d'une roue et articulé autour d'un axe vertical, avec un demi-châssis arrière équipé également à chaque extrémité d'une roue. Un poste de conduite est monté autour de l'axe d'articulation vertical. Un tel porte-outils enjambe uniquement une ligne de culture et n'offre pas une visibilité et une sécurité pour progresser sur un terrain présentant diverses irrégularités.

Il est également connu par le brevet FR 2 560 143 un tracteur enjambeur comportant un châssis en forme d'un U inversé comportant une branche horizontale pourvue d'un poste de conduite et d'un groupe moteur. Cette poutre horizontale est prolongée, de part et d'autre, par des jambes verticales pourvues chacune d'une roue arrière. Un tel véhicule comporte également un palonnier articulé sur le châssis et équipé de deux roues de stabilisation situées chacune sensiblement dans le prolongement d'une roue arrière. Les dimensions du châssis et du palonnier sont adaptées de manière que le poste de conduite s'établisse entre deux lignes de culture tandis que les roues s'établissent de part et d'autre de ces deux lignes de culture. Si un tel véhicule autorise le déplacement des roues de stabilisation dans un plan transversal au véhicule pour tenir compte des irrégularités du terrain, il doit être constaté que le poste de conduite en partie haute du châssis constitue un inconvénient en ce qui concerne la stabilité générale du véhicule.

L'objet de l'invention vise à remédier aux inconvénients de l'état de la technique, en proposant un véhicule enjambeur automoteur conçu pour permettre d'enjamber deux lignes de culture et pourvu d'un poste de conduite offrant un maximum de visibilité et de sécurité tout en permettant la progression du véhicule en toute sécurité sur un terrain présentant diverses irrégularités ou déclivités.

Un autre objet de l'invention vise à proposer un nouveau véhicule enjambeur automoteur à caractère universel ou standard, adapté pour pouvoir être utilisé pour la plupart des travaux concernant l'aménagement du sol et l'entretien des cultures en ligne.

Pour atteindre un tel objectif, le véhicule enjambeur automoteur comporte :
- un demi-châssis avant et un demi-châssis arrière disposés l'un derrière l'autre en étant assemblés ensemble à l'aide d'une liaison pivot, les demi-châssis comportant respectivement d'une part, un train de roulement avant et un train de roulement arrière disposés en ligne l'un derrière l'autre selon l'axe longitudinal du véhicule et d'autre part, un train de roulement de stabilisation gauche et un train de roulement de stabilisation droit disposés de part et d'autre de l'axe longitudinal du véhicule enjambeur,
- un poste de conduite monté sur l'un et/ou l'autre des demi-châssis,
- et un groupe moteur de déplacement du véhicule, monté sur l'un et/ou l'autre des demi-châssis.

Selon une variante préférée de réalisation, la liaison pivot comporte un axe de pivotement s'étendant selon une direction confondue avec l'axe longitudinal et coopérant avec un palier porté par la partie inférieure d'un demi-châssis dont l'autre demi-châssis est pourvu de l'axe de pivotement.

Avantageusement, chaque demi-châssis se présente sous la forme d'un portique en U inversé comportant une branche de liaison entre une jambe externe de support d'un train de roulement de stabilisation et une structure centrale pourvue d'un train de roulement.

Par exemple, la structure centrale d'un demi-châssis est pourvue d'un poste de conduite tandis que la structure centrale de l'autre demi-châssis est pourvue du groupe moteur de déplacement.

Selon une variante préférée de réalisation, le véhicule enjambeur comporte un dispositif de reprise des efforts disposé entre les branches de liaison des demi-châssis.

Par exemple, le dispositif de reprise des efforts comporte un axe de friction porté par l'une des structures centrales d'un demi-châssis et engagé en appui dans une glissière présentant un chemin de guidage circulaire centré sur l'axe de pivotement de la liaison pivot.

Avantageusement, les portiques délimitent entre la jambe et la structure centrale voisine, des passages libres pour enjamber un rang de végétaux, disposés de part et d'autre de l'axe longitudinal du véhicule.

Selon une variante préférée de réalisation, la branche de liaison de chaque portique est réglable en écartement pour régler l'écartement de la jambe externe par rapport à la structure centrale voisine.

Avantageusement, les trains de roulement de stabilisation sont montés de manière symétriquement opposés par rapport à l'axe longitudinal du véhicule.

Par exemple, les trains de roulement avant, arrière et de stabilisation gauche et droite comportent chacun au moins une roue.

Selon une caractéristique de l'invention, les trains de roulement avant et arrière sont directeurs.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective ¾ avant d'un exemple de réalisation d'un véhicule enjambeur automoteur conforme à l'invention.
La **Figure 2** est une vue de dessus du véhicule enjambeur automoteur conforme à l'invention.
La **Figure 3** est une vue de face du véhicule enjambeur automoteur conforme à l'invention.
Les **Figures 4** et **5** sont des vues respectivement des demi-châssis arrière et avant constitutif du véhicule enjambeur automoteur conforme à l'invention.
La **Figure 6** est un schéma simplifié permettant d'expliciter la structure du véhicule enjambeur automoteur conforme à l'invention.
Les **Figures 7** à **9** sont des vues montrant différentes positions du véhicule enjambeur automoteur selon différentes configurations du terrain.

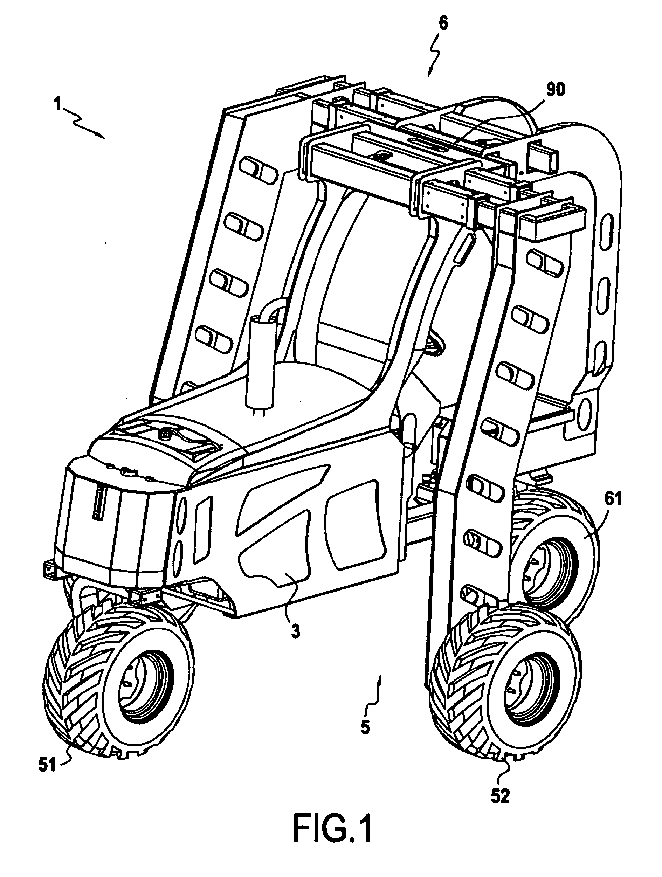

Tel que cela ressort des **Fig. 1** à **5****,** l'objet de l'invention concerne un véhicule enjambeur automoteur **1** adapté pour enjamber simultanément deux rangs **2** de cultures en ligne de tout type. Le véhicule enjambeur automoteur **1** comporte un groupe moteur **3** et un poste de conduite **4** situés entre les deux rangs de culture **2** enjambés par le véhicule enjambeur automoteur **1**.

Le véhicule enjambeur automoteur **1** comporte un demi-châssis avant **5** et un demi-châssis arrière **6** disposés l'un derrière l'autre en étant assemblés ensemble à l'aide d'une liaison pivot **8** permettant d'assurer un pivotement ou un basculement relatif entre les demi-châssis **5**, **6** comme cela sera expliqué en détail dans la suite de la description.

Le demi-châssis avant **5** comporte un train de roulement avant **51** et un premier train de roulement de stabilisation **52** dit gauche dans l'exemple illustré par rapport au sens d'avancement du véhicule enjambeur automoteur **1**, représenté par la flèche **F₁**. De même, le demi-châssis arrière **6** comporte un train de roulement arrière **61** et un deuxième train de roulement de stabilisation **62** dit droit dans l'exemple illustré. D'une manière générale, le demi-châssis avant **5** comporte un train de roulement avant **51** et un train de roulement de stabilisation **52** situé d'un côté du véhicule tandis que le demi-châssis arrière **6** comporte un train de roulement arrière **61** et un train de roulement de stabilisation **62** situé de l'autre côté du véhicule.

Selon une variante préférée de réalisation illustré sur les figures, les trains de roulement avant **51**, arrière **61** et de stabilisation gauche **52** et droit **62** comportent chacun une roue montée sur un essieu **9** porté par les demi-châssis **5**, **6**. Bien entendu, les trains de roulement **51**, **52**, **61**, **62** peuvent comporter une ou plusieurs roues, voire une chenille.

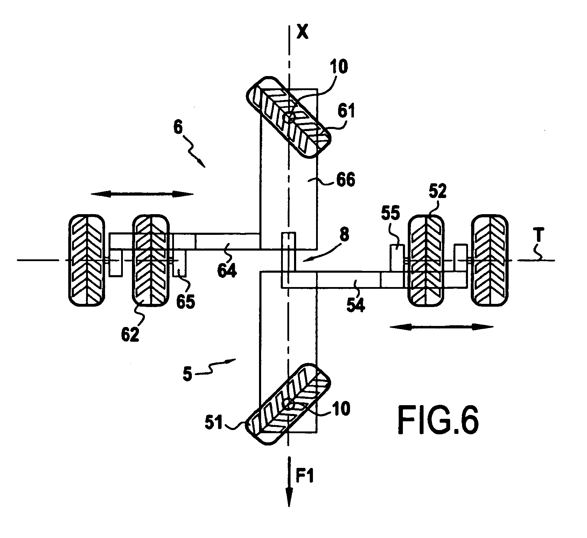

Selon une caractéristique de réalisation, les trains de roulement avant **51** et le train de roulement arrière **61** sont directeurs. Ainsi, les trains de roulement avant **51** et arrière **61** sont articulés selon un pivot vertical **10** pour permettre leur pivotement dans le plan vertical et présenter une angulation par rapport au plan vertical passant par l'axe longitudinal **X** du véhicule enjambeur **1**. Tel que cela ressort plus précisément de la **Fig. 6**, les trains de roulement avant **51** et arrière **61** sont commandés en pivotement en sens contraire par le poste de conduite **4** afin d'assurer un déplacement à gauche ou à droite du véhicule enjambeur **1**. Le montage des trains de roulement ainsi que leur commande en pivotement associés à d'éventuels systèmes d'amortissement ne sont pas décrits plus précisément car ils sont bien connus de l'homme du métier et ne font pas partie précisément de l'objet de l'invention.

Selon une caractéristique de l'invention, le train de roulement avant **51** et le train de roulement arrière **61** sont disposés en ligne l'un derrière l'autre pour s'étendre selon l'axe longitudinal **X** du véhicule correspondant à l'axe antéro-postérieur du véhicule enjambeur automoteur **1**. Le train de roulement gauche de stabilisation **52** et le train de roulement droit de stabilisation **62** sont disposés de part et d'autre de l'axe longitudinal **X** du véhicule enjambeur automoteur **1**.

Selon une variante préférée de réalisation, les trains de roulement de stabilisation droit **62** et gauche **52** sont situés dans un même plan transversal vertical **T** perpendiculaire à l'axe longitudinal **X**.

Selon une autre caractéristique de l'invention, le demi-châssis avant **5** se présente dans le plan vertical sous la forme d'un portique en U inversé **53** comportant une branche de liaison **54** entre d'une part, une jambe externe **55** de support du train de roulement de stabilisation gauche **52** et d'autre part, une structure centrale **56** pourvue du train de roulement avant **51**. De même, le demi-châssis arrière **6** se présente dans le plan vertical sous la forme d'un portique en U inversé **63** comportant une branche de liaison **64** entre d'une part, une jambe externe **65** de support du train de roulement de stabilisation droit **62** et d'autre part, une structure centrale **66** pourvue du train de roulement arrière **61**.

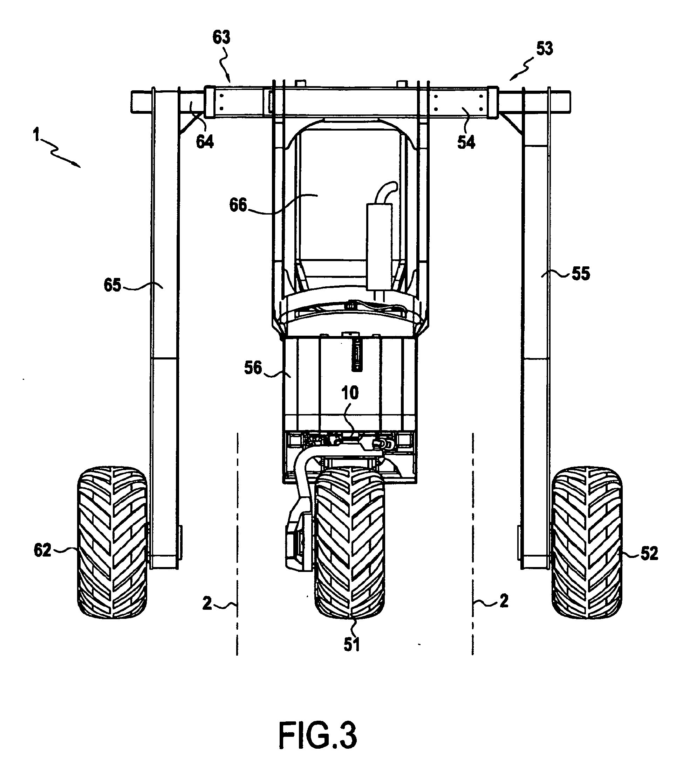

Tel que cela ressort clairement de la **Fig. 3**, chaque portique **53**, **63** présente dans le plan vertical, une forme de U inversé, enjambant chacun un rang de culture **2** différent. Les structures centrales **56**, **66** des demi-châssis **5**,**6** sont positionnées l'une derrière l'autre en étant centrées selon l'axe longitudinal **X**. Dans l'exemple illustré, le demi-châssis avant **5** comporte une jambe externe **55** située sur le côté gauche du véhicule enjambeur **1** alors que la jambe externe **65** du demi-châssis arrière **6** est située du côté droit du véhicule enjambeur **1**. Bien entendu, la jambe externe **55** du demi-châssis avant **5** et par suite, le premier train de stabilisation **52** peuvent être situés sur le côté droit alors que la jambe externe **65** du demi-châssis arrière **6** et par suite le deuxième train de stabilisation **62** peuvent s'étendre sur le côté gauche.

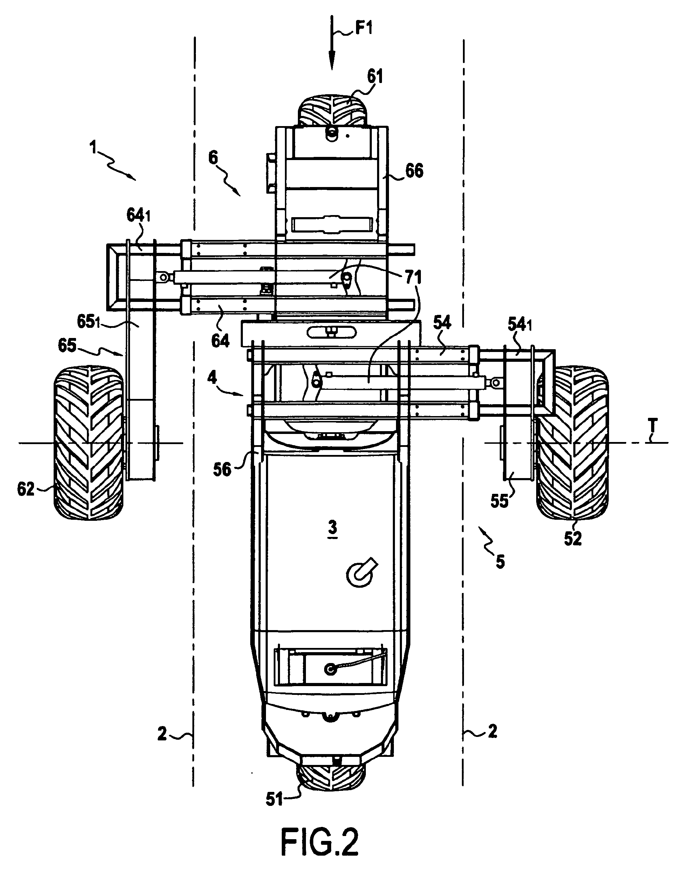

Selon une caractéristique préférée de réalisation, les branches de liaison **54**, **64** s'étendent horizontalement à un même niveau, lorsque le véhicule enjambeur **1** roule sur un sol plat (**Fig. 3**). En d'autres termes, les branches de liaison **54**, **64** s'étendent dans un plan commun horizontal situé à une distance déterminée du sol correspondant à la hauteur maximale des rangs de culture **2** enjambés. Par ailleurs, comme cela apparaît plus clairement à la **Fig. 2**, les branches de liaison **54, 64** sont décalées entre elles selon l'axe longitudinal **X**. Bien entendu, il peut être envisagé que les branches de liaison **54**, **64** se retrouvent sensiblement alignées transversalement à l'axe longitudinal **X**.

Chaque demi-châssis **5,6** est constitué par diverses membrures, longerons ou traverses associés ou non à un capotage de protection ou d'esthétisme en fonction des fonctions associées. Dans l'exemple illustré, le demi-châssis arrière **6** est aménagé pour présenter le poste de conduite **4** tandis que le demi-châssis avant **5** est adapté pour le montage du groupe moteur **3**. Bien entendu, il peut être prévu d'intervertir la position du poste de conduite **4** et du groupe moteur **3** sur les demi-châssis **5**,**6**. De même, il peut être envisagé que certains des organes, équipements ou éléments du poste de conduite **4** et/ou du groupe moteur **3** se trouvent situés à la fois sur les demi-châssis **5** et **6**.

Dans l'exemple de réalisation illustré, la structure centrale **56** du demi-châssis **5** présente une structure allongée **57** de support du groupe moteur **3** à partir de laquelle deux bras de raccordement **58** s'élèvent verticalement pour être reliés au niveau de la branche de liaison **54** du portique. Il doit donc être considéré que le portique **53** présente une forme en U inversé dans le plan vertical et une forme sensiblement en L dans le plan horizontal avec la structure centrale **57** s'étendant vers l'avant par rapport à la branche de liaison **54** du portique.

Dans l'exemple de réalisation illustré, la structure centrale **66** du demi-châssis arrière **6** est aménagée en poste de conduite **4**. A cet effet, cette structure centrale **66** est pourvue d'un siège **67** surmonté, d'une part à l'arrière par un arceau de liaison **68** s'élevant jusqu'à la branche de liaison **64** et d'autre part, à l'avant par un pare-brise **69** supporté par des montants **70** raccordés à la branche de liaison **64**. Il est à noter que le siège **67** s'élève à une faible distance du sol, en étant positionné pour surmonter le train de roulement arrière **61**. Le poste de conduite **4** qui est équipé bien entendu de tous les organes de commande et de manoeuvre ne sera pas décrit plus précisément dans la mesure où il est bien connu de l'homme du métier et ne fait pas partie précisément de l'objet de l'invention.

Comme indiqué précédemment, les trains de roulement de stabilisation gauche **52** et droit **62** sont disposés de manière symétriquement opposés par rapport à l'axe longitudinal **X** du véhicule enjambeur automoteur **1**. En d'autres termes et tel que cela ressort plus précisément de la **Fig. 2**, les trains de roulement de stabilisation gauche **52** et droit **62** sont disposés selon un axe transversal commun perpendiculaire par rapport à l'axe longitudinal **X**.

Pour permettre le montage aligné des essieux des trains de stabilisation gauche **52** et droit **62**, l'une et/ou l'autre des jambes externes **55**, **65** présentent une conformation ou un profil s'étendant dans un plan vertical parallèle au plan antéropostérieur du véhicule enjambeur **1**. Tel que cela ressort de la **Fig. 2**, la jambe externe **65** présente une partie droite **65₁** s'étendant vers l'avant du véhicule enjambeur de manière que le train de roulement de stabilisation droit **62** se trouve décalé vers l'avant par rapport à la branche de liaison **64**, et selon l'axe longitudinal **X.** Il est à noter que chaque jambe externe **55**, **65** peut être pourvue d'un système permettant de régler sa longueur.

Selon une caractéristique avantageuse de réalisation, chaque portique **53**, **63** comporte un système permettant de régler l'écartement de la jambe externe **55**, **65** par rapport à la structure centrale voisine **56**, **66**. Un tel système permet de régler la largeur de la voie du véhicule permettant de s'adapter à la largeur des rangs de végétaux **2** enjambés. Par exemple, chaque branche de liaison **54, 64** comporte une partie fixe s'étendant à partir de la structure centrale **56, 66** et une partie coulissante ou télescopique **54₁**, **64₁** engagée dans la partie fixe. La partie coulissante **54**, **64** qui est pourvue d'une jambe externe **55**, **65** est déplacée à l'aide d'un organe d'actionnement **71** tel qu'un vérin assurant le déplacement de la jambe **55**, **65** selon une direction transversale perpendiculaire à la direction longitudinale **X** du véhicule enjambeur.

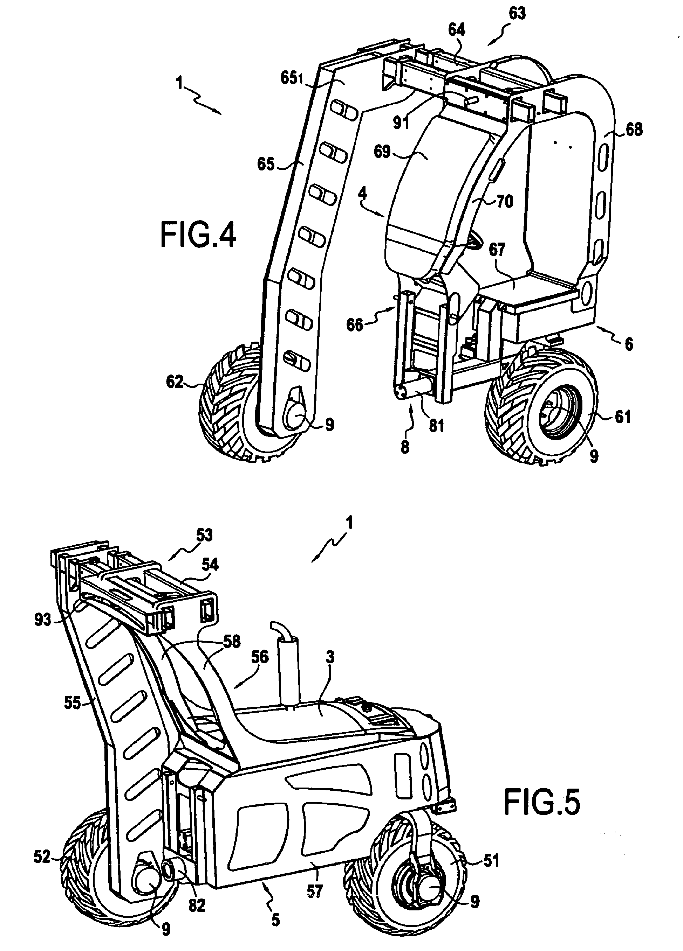

Tel que cela ressort plus précisément des **Fig. 5** et **6**, la liaison pivot **8** comporte un axe de pivotement **81** porté par l'un des châssis et coopérant avec un palier **82** porté par l'autre demi-châssis. Dans l'exemple de réalisation illustré, l'axe de pivotement **81** est porté par le demi-châssis arrière **6** tandis que le palier **82** est porté par le demi-châssis avant **5**. Plus précisément, l'axe de pivotement **81** s'étend à l'avant et avantageusement en partie basse de la structure centrale **66** tandis que le palier **82** s'étend à l'arrière et en partie basse de la structure centrale **56.** Bien entendu, il peut être envisagé d'intervertir le montage de l'axe de pivotement **81** et du palier **82**, sur les châssis **5**, **6**. Dans le même sens, la liaison pivot **8** peut être réalisée différemment par tous moyens techniques appropriés afin d'assurer un pivotement relatif entre les demi-châssis **5**, **6**. Par exemple, la liaison pivot **8** peut comporter différents organes permettant de définir un axe virtuel de rotation entre les demi-châssis **5**, **6**.

Selon l'exemple de réalisation illustré, l'axe de pivotement **81** s'étend selon une direction confondue avec l'axe longitudinal **X** du véhicule. Une telle disposition permet d'obtenir une articulation des demi-châssis **5**, **6** entre eux selon un plan vertical transversal de manière, comme cela sera montré dans la suite de la description, à s'adapter aux irrégularités du terrain sur lequel progresse le véhicule enjambeur automoteur **1**.

Il ressort de la description qui précède que chaque demi-châssis **5**, **6** est en équilibre en trois points à savoir par un train de roulement avant ou arrière, un train de roulement de stabilisation et la liaison pivot.

Selon une caractéristique préférée de réalisation, le véhicule enjambeur automoteur **1** comporte également un dispositif **90** de reprise des efforts intervenant lors du pivotement autour de la liaison pivot **8**, susceptible d'intervenir entre les demi-châssis avant **5** et demi-châssis arrière **6**. Dans l'exemple illustré, le dispositif de reprise des efforts **90** est disposé entre les structures centrales **56**, **66** des demi-châssis **5**, **6** et de préférence mais non exclusivement, en partie haute des structures centrales **56**, **66**.

Par exemple, le dispositif de reprise des efforts **90** comporte un axe de friction **91** s'étendant parallèlement à l'axe **81** et porté par l'une des structures centrales **56**, **66**, par exemple, la structure centrale **66** du demi-châssis arrière **6** dans l'exemple illustré. Avantageusement, l'axe de friction **91** et l'axe de pivotement **81** s'étendent dans le plan vertical antéro-postérieur du véhicule enjambeur **1**, avec de préférence un écartement maximum. L'axe de friction **91** est engagé en appui à l'intérieur d'une glissière **93** aménagée dans la structure centrale **56** du demi-châssis avant **5**. La glissière **93** présente un chemin de guidage selon un cercle centré sur l'axe de pivotement **81** de la liaison pivot **8**. De préférence, cette glissière **93** comporte un matériau d'aide au frottement pour l'axe de friction **91**.

Il ressort de la description qui précède que le véhicule enjambeur automoteur **1** selon l'invention permet d'enjamber simultanément deux rangs de culture **2** tout en offrant une visibilité et une sécurité au poste de conduite **4** et tout en assurant une stabilité au véhicule même progressant sur un sol irrégulier.

Dans le cas où le véhicule enjambeur automoteur **1** progresse sur un terrain plat comme illustré par exemple sur la **Fig. 3**, les branches de liaison **54**, **64** des deux portiques **53**, **63** s'étendent de manière sensiblement horizontale de sorte que les roues avant **51** et arrière **61** sont alignées l'une derrière l'autre, en s'étendant sensiblement selon un même plan vertical. De même, les roues de stabilisation gauche **52** et droite **62** s'étendent chacune verticalement parallèlement entre elles.

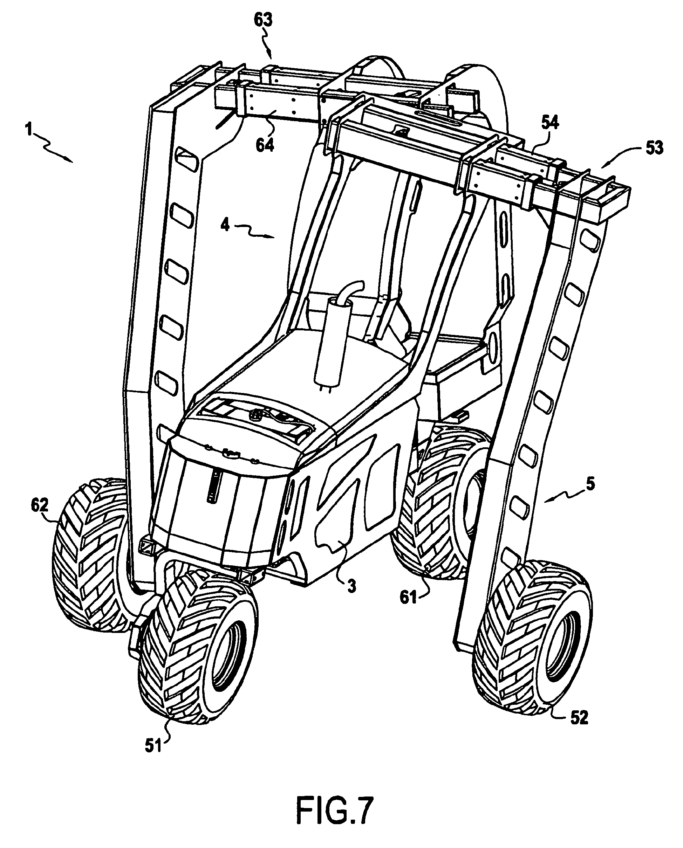

Dans le cas où le véhicule **1** progresse sur un terrain où la roue de stabilisation gauche **52** est à un niveau inférieur au reste du véhicule comme illustré à la **Fig. 7**, le demi-châssis avant **5** pivote autour de la liaison pivot **8**. Il s'ensuit que le portique **53** bascule du côté gauche de manière que la roue de stabilisation gauche **52** reste en contact avec le sol. Simultanément, la roue avant **51** subit un pivotement dans le même sens.

Bien entendu, le même phénomène peut être obtenu lorsque la roue de stabilisation droite **62** progresse sur un sol à un niveau inférieur par rapport aux autres roues du véhicule.

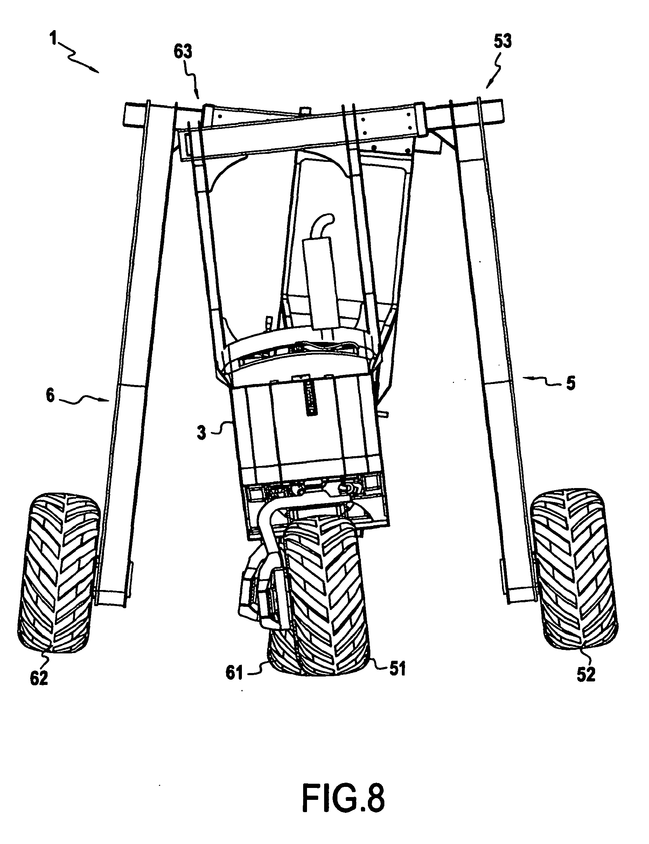

La **Fig. 8** illustre un autre exemple de condition de roulement dans lequel le véhicule enjambeur automoteur **1** progresse sur un terrain avec des passages sur des bosses à droite et à gauche du véhicule. Dans ce cas, les deux demi-châssis **5, 6** subissent un pivotement selon la liaison pivot **8** selon des sens contraires ayant pour effet une remontée des roues de stabilisation **52**, **62**. Simultanément, les roues avant **51** et arrière **61** s'inclinent en sens contraire par rapport au plan vertical antéro-postérieur.

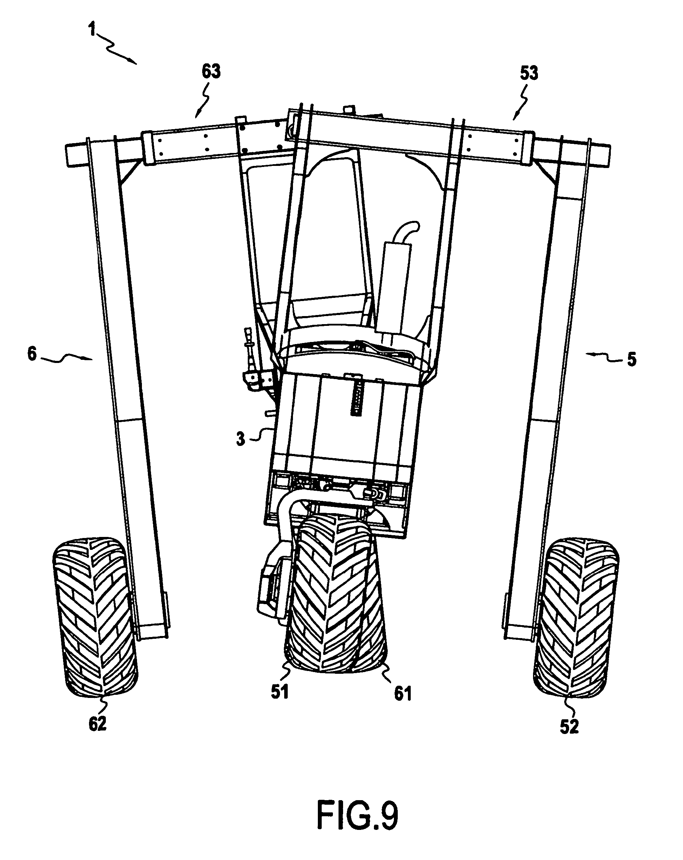

La **Fig. 9** illustre un autre exemple de condition de roulement dans lequel le véhicule enjambeur automoteur **1** progresse sur un terrain où les roues de stabilisation **52**, **62** se trouvent dans des fossés. Dans ce cas, les demi-châssis **5**, **6** pivotent l'un par rapport à l'autre vers le bas de sorte que les roues de stabilisation **52**, **62** restent en contact permanent avec le terrain. Simultanément, l'abaissement des portiques **53**, **63** vers l'extérieur du véhicule enjambeur **1** conduit à l'inclinaison des roues avant **51** et arrière **61** en sens contraire par rapport au plan vertical antéro-postérieur.

Il ressort de la description qui précède que le véhicule enjambeur automoteur **1** selon l'invention permet de rester en contact avec le sol quelque soient les différentes conditions de roulement. Le véhicule enjambeur **1** est ainsi apte à effectuer la plupart des travaux concernant l'aménagement du sol et l'entretien des cultures en ligne. A cet effet, les demi-châssis **5**, **6** sont destinés à être pourvus de divers équipements permettant de travailler le sol et d'entretenir les cultures. Par exemple, les portiques **53, 63** sont pourvus de porte-outils ou de systèmes d'attaches assurant la fixation, par exemple temporaire, des équipements ou outils appropriés aux travaux à effectuer.

Il est à considérer que le véhicule enjambeur **1** selon l'invention présente un caractère universel pour permettre la réalisation, en toute sécurité et avec une bonne visibilité, de la plupart des travaux sur des cultures en lignes, quelle que soit la hauteur des cultures et la largeur entre les rangs de culture. A cet égard, il est à noter que dans l'exemple illustré, les branches de liaison **54** et **64** du portique s'étendent à partir du sommet des structures centrales **56**, **66** et notamment du haut du poste de conduite **4**, de manière à disposer d'une hauteur maximum pour enjamber les rangs de culture. Bien entendu, il peut être envisagé que les branches de liaison **54**, **64** s'étendent à partir des structures centrales **56**, **66** à un niveau inférieur du sommet desdites structures centrales.

Il est à noter que, dans l'exemple illustré, l'axe **81** de la liaison pivot **8** s'étend selon l'axe longitudinal **X** du véhicule enjambeur. Il est à noter que la liaison pivot **8** entre les demi-châssis **5**, **6** peut s'étendre selon une direction différente et par exemple perpendiculairement à l'axe longitudinal **X**. Dans ce cas, les demi-châssis **5**, **6** pivotent dans le plan vertical longitudinal du véhicule enjambeur **1**.

L'invention n'est pas limitée aux exemples décrits et représentés car diverses modifications peuvent y être apportées sans sortir de son cadre.

## Revendications

1. Véhicule enjambeur automoteur, comportant :
- un demi-châssis avant (**5**) et un demi-châssis arrière (**6**) disposés l'un derrière l'autre en étant assemblés ensemble à l'aide d'une liaison pivot (**8**), **caractérisé en ce que** les, demi-châssis (**5, 6**) comportent respectivement d'une part, un train de roulement avant (**51**) et un train de roulement arrière (**61**) disposés en ligne l'un derrière l'autre selon l'axe longitudinal (**X**) du véhicule et d'autre part, un premier train de roulement de stabilisation dit gauche (**52**) et un deuxième train de roulement de stabilisation dit droit (**62**) disposés de part et d'autre de l'axe longitudinal du véhicule enjambeur,
- un poste de conduite (**4**) monté sur l'un et/ou l'autre des demi-châssis,
- et un groupe moteur (**3**) de déplacement du véhicule, monté sur l'un et/ou l'autre des demi-châssis.

2. Véhicule enjambeur selon la revendication 1, **caractérisé en ce que** la liaison pivot (**8**) comporte un axe de pivotement (**81**) s'étendant selon une direction confondue avec l'axe longitudinal (**X**) et coopérant avec un palier (**82**) porté par la partie inférieure d'un demi-châssis dont l'autre demi-châssis est pourvu de l'axe de pivotement.

3. Véhicule enjambeur selon la revendication 1, **caractérisé en ce que** chaque demi-châssis (**5,6**) se présente sous la forme d'un portique en U inversé (**53, 63**) comportant une branche de liaison (**54, 64**) entre une jambe externe (**55, 65**) de support d'un train de roulement de stabilisation (**52, 62**) et une structure centrale (**56, 66**) pourvue d'un train de roulement (**51, 61**).

4. Véhicule enjambeur selon la revendication 3, **caractérisé en ce que** la structure centrale (**56, 66**) d'un demi-châssis est pourvue d'un poste de conduite (**4**) tandis que la structure centrale (**56, 66**) de l'autre demi-châssis est pourvue du groupe moteur de déplacement (**3**).

5. Véhicule enjambeur selon la revendication 3 ou 4, **caractérisé en ce qu'**il comporte un dispositif (**90**) de reprise des efforts disposé entre les branches de liaison (**54, 64**) des demi-châssis (**5, 6**).

6. Véhicule enjambeur selon la revendication 5, **caractérisé en ce que** le dispositif de reprise des efforts (**90**) comporte un axe de friction (**91**) porté par l'une des structures centrales d'un demi-châssis et engagé en appui dans une glissière (**93**) présentant un chemin de guidage circulaire centré sur l'axe de pivotement (**81**) de la liaison pivot, la glissière (**93**) étant aménagée dans l'autre structure centrale d'un demi-châssis.

7. Véhicule enjambeur selon la revendication 3, **caractérisé en ce que** les portiques (**53, 63**) délimitent entre la jambe (**55, 65**) et la structure centrale (**56, 66**) voisine, des passages libres pour enjamber un rang de végétaux (**2**), disposés de part et d'autre de l'axe longitudinal (**X**) du véhicule.

8. Véhicule enjambeur selon la revendication 3 ou 8, **caractérisé en ce que** la branche de liaison (**54, 64**) de chaque portique est réglable en écartement pour régler l'écartement de la jambe externe (**55, 65**) par rapport à la structure centrale voisine (**56, 66**).

9. Véhicule enjambeur selon la revendication 3, caractérisé en ce les trains de roulement de stabilisation (**52, 62**) sont montés de manière symétriquement opposés par rapport à l'axe longitudinal (**X**) du véhicule.

10. Véhicule enjambeur selon la revendication 3, **caractérisé en ce que** chaque jambe externe (**55, 65**) est pourvue d'un système permettant de régler sa longueur.

11. Véhicule enjambeur selon la revendication 1, **caractérisé en ce que** les trains de roulement avant (**51**), arrière (**61**) et de stabilisation gauche (**52**) et droite (**62**) comportent chacun au moins une roue.

12. Véhicule enjambeur selon la revendication 11, **caractérisé en ce que** les trains de roulement avant (**51**) et arrière (**61**) sont directeurs.

## Patentansprüche

1. Pflegetraktorfahrzeug mit Eigenantrieb, umfassend:
- ein vorderes Halbchassis (5) und ein hinteres Halbchassis (6), die hintereinander angeordnet und gemeinsam mit Hilfe einer Schwenkverbindung (8) verbunden sind, **dadurch gekennzeichnet, daß** die Halbchassis (5, 6) jeweils einerseits ein vorderes Fahrwerk (51) und ein hinteres Fahrwerk (61) aufweisen, die in Reihe hintereinander entlang der Längsachse (X) des Fahrzeugs angeordnet sind, und andererseits ein erstes sogenanntes linkes Stabilisationsfahrwerk (52) und ein zweites sogenanntes rechtes Stabilisationsfahrwerk (62) aufweisen, die zu beiden Seiten der Längsachse des Pflegetraktorfahrzeugs angeordnet sind,
- einen Fahrerposten (4), der auf das eine und/oder das andere Halbchassis montiert ist,
- ein Antriebsaggregat (3) zum Fahren des Fahrzeugs, das auf das eine und/oder das andere Halbchassis montiert ist.

2. Pflegetraktorfahrzeug nach Anspruch 1, **dadurch gekennzeichnet, daß** die Schwenkverbindung (8) eine Schwenkachse (81) aufweist, die sich entlang einer Richtung erstreckt, die mit der Längsachse (X) zusammenfällt, und mit einem Lager (82) zusammenwirkt, das von dem unteren Teil eines Haibchassis getragen wird, dessen anderes Halbchassis mit der Schwenkachse versehen ist.

3. Pflegetraktorfahrzeug nach Anspruch 1, **dadurch gekennzeichnet, daß** jedes Halbchassis (5, 6) die Form eines umgekehrten U-Portals (53, 63) hat, das einen Verbindungsschenkel (54, 64) zwischen einer externen Stelze (55, 65) zum Tragen eines Stabilisationsfahrwerks (52, 62) und einer zentralen Struktur (56, 66), die mit einem Fahrwerk (51, 61) versehen ist, aufweist.

4. Pflegetraktorfahrzeug nach Anspruch 3, **dadurch gekennzeichnet, daß** die zentrale Struktur (56, 66) eines Halbchassis mit einem Fahrerposten (4) versehen ist, während die zentrale Struktur (56, 66) des anderen Halbchassis mit dem Fahrmotoraggregat (3) versehen ist.

5. Pflegetraktorfahrzeug nach Anspruch 3 oder 4, **dadurch gekennzeichnet, daß** es eine Vorrichtung (90) zum Aufnehmen der Kräfte aufweist, die zwischen den Verbindungsschenkeln (54, 64) der Halbchassis (5, 6) angeordnet ist.

6. Pflegetraktorfahrzeug nach Anspruch 5, **dadurch gekennzeichnet, daß** die Vorrichtung zur Aufnahme der Kräfte (90) eine Reibungsachse (91) aufweist, die von einer der zentralen Strukturen eines Halbchassis getragen ist und in Auflage in eine Gleitführung (93) eingreift, die einen kreisförmigen Führungsverlauf aufweist, der auf der Schwenkachse (81) der Schwenkverbindung zentriert ist, wobei die Gleitführung (93) in der anderen zentralen Struktur eines Halbchassis eingerichtet ist.

7. Pflegetraktorfahrzeug nach Anspruch 3, **dadurch gekennzeichnet, daß** die Portale (53, 63) zwischen der Stelze (55, 65) und der benachbarten zentralen Struktur (56, 66) freie Passagen, die zu beiden Seiten der Längsachse (X) des Fahrzeugs angeordnet sind, aufweisen, um eine Pflanzenreihe (2), zu überspannen.

8. Pflegetraktorfahrzeug nach Anspruch 3 oder 8, **dadurch gekennzeichnet, daß** jeder Verbindungsschenkel (54, 64) jedes Portals hinsichtlich seines Abstands einstellbar ist, um den Abstand der externen Stelze (55, 65) in bezug zu der benachbarten zentralen Struktur (56, 66) einzustellen.

9. Pflegetraktorfahrzeug nach Anspruch 3, **dadurch gekennzeichnet, daß** die Stabilisationsfahrwerke (52, 62) symmetrisch in bezug zu der Längsachse (X) des Fahrzeugs gegenüberliegend installiert sind.

10. Pflegetraktorfahrzeug nach Anspruch 3, **dadurch gekennzeichnet, daß** jede externe Stelze (55, 65) mit einem System versehen ist, das das Einstellen ihrer Länge erlaubt.

11. Pflegetraktorfahrzeug nach Anspruch 1, **dadurch gekennzeichnet, daß** das vordere Fahrwerk (51), das hintere Fahrwerk (61) und das linke Stabilisationsfahrwerk (52) und das rechte Stabilisationsfahrwerk (62 jeweils mindestens ein Rad aufweisen.

12. Pflegetraktorfahrzeug nach Anspruch 11, **dadurch gekennzeichnet, daß** das vordere Fahrwerk (51) und das hintere Fahrwerk (61) Lenkfahrwerke sind.

## Claims

1. A self-propelled high-clearance vehicle, comprising:
- a front half-chassis (**5**) and a rear half-chassis (**6**) placed one behind the other and assembled together by a pivot connection (**8**), **characterized in that** the half-chassis (**5, 6**) respectively comprise firstly a front wheel set (**51**) and a rear wheel set (**61**) disposed in line one behind the other along the longitudinal axis (**X**) of the vehicle, and secondly a first stabilizer wheel set (**52**) on the left and a second stabilizer wheel set (**62**) on the right located on either side of the longitudinal axis of the high-clearance vehicle;
- a driver's cab (**4**) mounted on one and/or the other of the half-chassis; and
- an engine unit (**3**) for driving the vehicle, mounted on one and/or the other of the half-chassis.

2. A high-clearance vehicle according to claim 1, **characterized in that** the pivot connection (**8**) comprises a pivot shaft (**81**) extending in a direction that coincides with the longitudinal axis (**X**) and co-operating with a bearing (**82**) carried by the bottom portion of one of the half-chassis, the other half-chassis being provided with the pivot shaft.

3. A high-clearance vehicle according to claim 1, **characterized in that** each half-chassis (**5, 6**) is in the form of an upside-down U-shaped portal (**53, 63**) comprising a link branch (**54, 64**) between an outer leg (**55, 65**) for supporting a stabilizer wheel set (**52, 62**) and a central structure (**56, 66**) provided with a wheel set (**51, 61**).

4. A high-clearance vehicle according to claim 3, **characterized in that** the central structure (**56, 66**) of one half-chassis is provided with a driver's cab (**4**), while the central structure (**56, 66**) of the other half-chassis is provided with the driving engine unit (**3**).

5. A high-clearance vehicle according to claim 3 or claim 4, **characterized in that** it includes a force-takeup device (**90**) disposed between the link branches (**54, 64**) of the half-chassis (**5, 6**).

6. A high-clearance vehicle according to claim 5, **characterized in that** the force-takeup device (**90**) comprises a friction pin (**91**) carried by one of the central structures of one of the half-chassis and engaged to bear in a slideway (**93**) presenting a circular guide path centered on the pivot axis (**81**) of the pivot connection, the slideway (**93**) being arranged in the other central structure of the other half-chassis.

7. A high-clearance vehicle according to claim 3, **characterized in that**, between its leg (**55, 65**) and the adjacent central I structure (**56, 66**), each portal (**53, 63**) defines a free passage for straddling a row of plants (**2**), the passages being located on either side of the longitudinal axis (**X**) of the vehicle.

8. A high-clearance vehicle according to claim 3 or claim 8, **characterized in that** the link branch (**54, 64**) of each portal is adjustable in spacing to adjust the spacing between the outer leg (**55, 65**) and the adjacent central structure (**56, 66**).

9. A high-clearance vehicle according to claim 3, **characterized in that** the stabilizer wheel sets (**52, 62**) are mounted in symmetrically opposite manner about the longitudinal axis (**X**) of the vehicle.

10. A high-clearance vehicle according to claim 3, **characterized in that** each outer leg (**55, 65**) is provided with a system enabling its length to be adjusted.

11. A high-clearance vehicle according to claim 1, **characterized in that** each of the front (**51**) and rear (**61**) and left (**52**) and right (**62**) stabilizer wheel sets comprises at least one wheel.

12. A high-learance vehicle according to claim 11, **characterized in that** the front (**51**) and rear wheel sets (**61**) are steerable.
